# EUROPEAN PATENT APPLICATION

(11) **EP 4 539 138 A1**
(43) Date of publication of application: **16.04.2025**
(21) Application number: 22955969.5
(22) Date of filing: 23.08.2022
(51) Int. Cl.: H01M 4/133, H01M 10/0525

(54) **SECONDARY BATTERY AND ELECTRIC APPARATUS**

(71) Applicant: Contemporary Amperex Technology (Hong Kong) Limited, Hong Kong (HK)
(72) Inventor: DU, Xianglong, Ningde, Fujian 352100 (CN); XU, Hu, Ningde, Fujian 352100 (CN); JIN, Yikuang, Ningde, Fujian 352100 (CN); NIU, Shaojun, Ningde, Fujian 352100 (CN); JIN, Haizu, Ningde, Fujian 352100 (CN)
(74) Representative: Thoma, Michael
(86) International application number: PCT/CN2022/114112
(87) International publication number: WO 2024/040420

(57) **Abstract**

The present application provides a secondary battery and an electrical device. The secondary battery includes an electrode assembly including a main body and a tab extending from the main body, wherein the main body includes a negative electrode plate including a negative current collector, and a negative electrode film layer arranged on at least one surface of the negative current collector, wherein the negative electrode film layer includes a first region and a second region arranged to at least one side of the first region, in the direction that the tab extends, wherein the first region includes a first negative electrode active material and the second region includes a second negative electrode active material, and wherein the first negative electrode active material has a powder OI value denoted as OIₐ, and the second negative electrode active material has a powder OI value denoted as OI_{b}, wherein the negative electrode film layer satisfies OIₐ < OI_{b}.

## Description

### Technical Field

The present application belongs to the field of battery technology, and in particular to a secondary battery and an electrical device.

### Backgrounds

A secondary battery achieves reversible charging and discharging by the reciprocating movement of active ions between a positive electrode and a negative electrode. Existing secondary batteries have advantages such as high energy density and long cycle life, pollution-free and memoryless effects. Accordingly, they are widely used in consumer electronic products and large devices such as electric vehicles and energy storage systems.

In the field of secondary battery technology, lithium precipitation on an electrode plate is one of the important reasons that affect the service life and the safety performance of a battery.

### Summary

The present application provides a secondary battery and an electrical device, which can have reduced lithium precipitation on its plate and improved service life and safety performance of the battery.

The first aspect of the present application provides a secondary battery comprising an electrode assembly comprising a main body and a tab extending from the main body, wherein the main body comprises a negative electrode plate comprising a negative current collector and a negative electrode film layer arranged on at least one surface of the negative current collector, wherein the negative electrode film layer comprises a first region and a second region arranged to at least one side of the first region in the direction that the tab extends, wherein the first region comprises a first negative electrode active material and the second region comprises a second negative electrode active material, wherein the first negative electrode active material has a powder OI value denoted as OIₐ, and the second negative electrode active material has a powder OI value denoted as OI_{b}, wherein the negative electrode film layer satisfies OIₐ < OI_{b}.

In the above embodiment, the first region and the second region are arranged in the direction that the tab extends, and the OI value of the active material of the second region is higher than that of the active material of the first region. By those means, the bulk orientation degree of the active material particles at the upper edge of the negative electrode plate can be increased, which can facilitate the intercalation of active ions; the dendrites that result from the reduction and precipitation of the active ions on the negative electrode surface can be reduced; and the precipitation at the place where the thickness changes on the negative electrode plate (such as the connection between the main body and the tab) can be improved. Accordingly, the risk of short circuits in the battery caused by the piercing of the separator by the dendrites can be reduced; and thus the safety performance and service life of the battery can be increased.

In some embodiments of the present application, the powder OI value of the first negative electrode active material is denoted as OIₐ, and the powder OI value of the second negative electrode active material is denoted as OI_{b}, wherein OIₐ and OI_{b} satisfy 0.6 ≤ OIₐ/OI_{b} < 1, and optionally 0.7 ≤ OIₐ/OI_{b} ≤ 0.9. Under the condition that the powder OI value of the first negative electrode active material and that of the second negative electrode active material have a proper ratio, the active ion precipitation in the secondary battery can be further improved and the safety performance of the battery can be improved.

In some embodiments of the present application, the powder OI value of the first negative electrode active material is denoted as OIₐ and the powder OI value of the second negative electrode active material is denoted as OI_{b}, wherein OIₐ and OI_{b} satisfy 2.5 ≤ OIₐ ≤ 3.5, and optionally 2.5 ≤ OIₐ ≤ 3.0; and/or 3.0 ≤ OI_{b} ≤ 4.5, and optionally 3.5 ≤ OI_{b} ≤ 4.0. Under the condition that the powder OI value of the first negative electrode active material and that of the second negative electrode active material fall within proper value ranges, the active ion precipitation in the secondary battery can be further improved and the safety performance of the battery can be increased.

In some embodiments of the present application, the first region has a plate OI value denoted as OI₁ and the second region has a plate OI value denoted as OI₂, wherein OI₁ and OI₂ satisfy OI₁ < OI₂.

In the above embodiment, the plate OI value of the second region is set to be higher than the plate OI value of the first region. By this means, the bulk orientation degree of the active material particles at the upper edge of the negative electrode plate can be further increased, which can facilitate the intercalation of active ions; and the dendrites that result from the reduction and precipitation of the active ions on the negative electrode surface can be reduced. Accordingly, the safety performance and service life of the battery can be increased.

In some embodiments of the present application, the plate OI value of the first region is denoted as OI₁ and the plate OI value of the second region is denoted as OI₂, wherein OI₁ and OI₂ satisfy 0.7 ≤ OI₁/OI₂ < 1. Under the condition that the plate OI value of the first negative electrode active material and that of the second negative electrode active material have a proper ratio, the active ion precipitation in the secondary battery can be further improved and the safety performance of the battery can be improved.

In some embodiments of the present application, the plate OI value of the first region, denoted as OI₁, satisfies 7 ≤ OI₁ ≤ 8, and optionally 7.4 ≤ OI₁ ≤ 7.8; and/or the plate OI value of the second region, denoted as OI₂, satisfies 8 ≤ OI₂ ≤ 10, and optionally 8.5 ≤ OI₂ ≤ 9.5. Under the condition that the plate OI value of the first region and that of the second region fall within proper value ranges, the active ion precipitation in the secondary battery can be further improved and the safety performance of the battery can be improved.

In some embodiments of the present application, the first negative electrode active material has a volume average particle size Dv50 of from 8 µm to 15 µm, and optionally from 9 µm to 12 µm; and/or, the second negative electrode active material has a volume average particle size Dv50 of from 4 µm to 8 µm, and optionally from 5 µm to 7 µm. Under the condition that the Dv50 of the first negative electrode active material falls within a proper range, the cycle life and fast charging performance of the battery can be improved. Under the condition that the Dv50 of the second negative electrode active material is reduced properly, the gaps in the second region can be increased so as to facilitate the intercalation of active ions.

In some embodiments of the present application, the powder compaction density under a pressure of 3000N of the first negative electrode active material is higher than the powder compaction density under a pressure of 3000N of the second negative electrode active material. By making the powder compaction density of the first negative electrode active material be higher than that of the second negative electrode active material, the gaps in the second region can be increased, which can facilitate the intercalation of active ions, while a higher cycle life, fast charging performance, and energy density can be achieved.

In some embodiments of the present application, the powder compaction density under a pressure of 3000N of the first negative electrode active material is denoted as P₁, and the powder compaction density under a pressure of 3000N of the second negative electrode active material is denoted as P₂, wherein P₁ and P₂ satisfy 1 ≤ P₁/P₂ ≤ 1.2, and optionally 1.05 ≤ P₁/P₂ ≤ 1.15. Under the condition that the powder compaction density of the first negative electrode active material and that of the second negative electrode active material have a proper ratio, the gaps in the second region can be increased, which can facilitate the intercalation of active ions, while a higher cycle life, fast charging performance, and energy density can be achieved.

In some embodiments of the present application, the powder compaction density under a pressure of 3000N of the first negative electrode active material is from 1.45g/cm³ to 1.65g/cm³, and optionally from 1.5 g/cm³ to 1.6 g/cm³; and/or, the powder compaction density under a pressure of 3000N of the second negative electrode active material is from 1.35g/cm³ to 1.45g/cm³, and optionally from 1.4 g/cm³ to 1.45 g/cm³. Under the condition that the powder compaction density of the first negative electrode active material and that of the second negative electrode active material fall within proper ranges, the gaps in the second region can be increased, which can facilitate the intercalation of active ions, while a higher cycle life, fast charging performance, and energy density can be achieved.

In some embodiments of the present application, the first negative electrode active material has a tap density higher than the tap density of the second negative electrode active material. Under the condition that the tap density of the first negative electrode active material is increased within a proper range, the cycle life of the battery is advantageously improved, and the energy density of the battery can also be increased.

In some embodiments of the present application, the second negative electrode active material is a secondary particle. By using such second negative electrode active material, the battery can have higher energy density, also can satisfy the requirements of reducing the precipitation of active ions and have an improved safety.

In some embodiments of the present application, the second region is arranged to the two sides of the first region; and optionally, two second regions arranged to the two sides of the first region have identical size in the direction that the tab extends. Under the condition that two second regions are arranged to two sides of the first region, the active ion precipitation in the edge areas of the two sides of the plate can be improved, also the safety performance of the battery can be improved.

In some embodiments of the present application, the first region has a size in the direction that the tab extends denoted as L₁, and the second region has a size in the direction that the tab extends denoted as L₂, wherein L₁ and L₂ satisfy L₁ ≥ L₂; optionally, 1 ≤ L₁/L₂ ≤ 50; and optionally, L₂ ≥ 15 mm. Under the condition that, in the direction that the tab extends, the size of the first region and that of the second region have a proper ratio, the active ion precipitation in the edge area of the plate can be improved, and the safety performance of the battery can be improved; while a higher cycle life, fast charging performance, and energy density of the secondary battery can be achieved.

In some embodiments of the present application, the first active material comprises an artificial graphite; and/or, the second active material comprises at least one of an artificial graphite, a natural graphite, a hard carbon, or a soft carbon. Under the condition that a proper amount of natural graphite is present in the first negative electrode active material, the energy density of the battery can be further improved. By using such a second negative electrode active material, the battery can have higher energy density and also have higher cycle life and fast charging ability.

The second aspect of the embodiment of the present application provides an electrical device comprising the secondary battery according to the present application for providing electrical energy.

The electrical device of the present application comprises the secondary battery of the present application, and thus can achieve beneficial effects corresponding to those of the secondary battery.

### Brief Description of the Drawings

In order to more clearly illustrate the technical solution of the present application, brief descriptions to the accompanied drawings described in the detailed description of the present application will be made. It should be understood that the accompanied drawings described below only illustrate some embodiments of the present application. For those ordinarily skilled in the art, other accompanied drawings can be obtained based on these drawings without any inventive effort.
Figure 1 is a schematic diagram of a secondary battery of one embodiment of the present application.
Figure 2 is an exploded view of Figure 1.
Figure 3 is a schematic diagram of an electrode assembly of one embodiment of the present application.
Figure 4 is a schematic diagram of an electrode assembly of another embodiment of the present application.
Figure 5 is a schematic diagram of an electrode assembly of yet another embodiment of the present application.
Figure 6 is a cross-sectional schematic diagram of a negative electrode plate of one embodiment of the present application.
Figure 7 is a cross-sectional schematic diagram of a negative electrode plate of another embodiment of the present application.
Figure 8 is a schematic diagram of a battery module of one embodiment of the present application.
Figure 9 is a schematic diagram of a battery pack of one embodiment of the present application.
Figure 10 is an exploded view of Figure 9.
Figure 11 is a schematic diagram a device in which a secondary battery is used as a power source.

### Detailed Description

In order to make the purpose, technical solutions, and advantageous technical effects of the present application more clear, hereinbelow, the present application will be further described in detail with reference to examples. It should be understood that the examples described in the present description are only intended to explain the application, but not to limit the application.

For simplicity, only some numerical ranges are explicitly disclosed herein. Nevertheless, any lower limit may be combined with any upper limit to form a range that is not explicitly recited. Moreover, any lower limit may be combined with other lower limit to form a range that is not explicitly recited; likewise, any upper limit may be combined with any other upper limit to form a range that is not explicitly recited. In addition, each point value or single value between the end points of a range is included in the range. Accordingly, each point value or single value *per se* may be a lower limit or an upper limit to be combined with any other point value or single value or with other lower limit or upper limit to form a range that is not explicitly recited.

Herein, it should be noted that, unless otherwise specified, "no less than" and "no more than" means including the number itself, and "more" in "one or more" means two or more than two.

The disclosures above in the present application are not intended to describe each embodiment as disclosed or each implementation in the present application. Hereinbelow, exemplary embodiments will be described more specifically. In the present application, many embodiments are provided for guidance, and these embodiments may be combined in many ways. For each embodiment, the enumerations are only a representative group but should not be interpreted as exhaustive enumerations.

Secondary batteries, also known as rechargeable batteries or storage batteries, refer to batteries that can be activated by charging for continuing use after being discharged.

Normally, a secondary battery includes an electrode assembly and electrolytic solution. The electrode assembly includes a main body and a tab extending from the main body. The main body may include a positive electrode plate, a negative electrode plate, and a separator. Usually, the main body has a stacked structure formed by stacking the positive electrode plate, negative electrode plate, and the separator, or has a winded structure formed by a winding process. The separator is arranged between the positive electrode plate and the negative electrode plate; the separator mainly prevents short circuits between the positive electrode and the negative electrode and allows ions to pass through. The tab includes a positive electrode tab that extends from the edge of the positive electrode plate and a negative electrode tab that extends from the edge of the negative electrode plate. The positive electrode tab and the negative electrode tab may extend from one side of the main body or from the opposite sides of the main body.

During the charging and discharging of the battery, active ions (such as lithium ions) repeatedly intercalate into and deintercalate out of the positive electrode plate and the negative electrode plate. The electrolytic solution infiltrates the main body and mainly plays a role of conducting the ions between the positive electrode plate and the negative electrode plate. The positive electrode tab and the negative electrode tab may be electrically connected to the corresponding electrode terminals (which may be arranged on the top cover component of the outer packaging of the battery) through adapters, thereby leading out the electrical energy of the main body.

Since an area with a reduced thickness is needed at a position where the tab is led out on the negative electrode plate, the interlayer spacing at that area increases. Accordingly, the active ions are easy to precipitate, thereby forming dendrites; the dendrites may pierce the separator thereby leading to the risk of causing short circuits inside the battery. As a result, the safety performance of the battery can be affected.

Through researching, the inventors have found that by optimizing the design of the negative electrode film layer, good active ion diffusion performance, even at the upper edge of the negative electrode plate, can be effectively ensured, in order to ensure that the secondary battery has high energy density and better safety performance at the same time.

Based on the above considerations, the inventors of the present application, through deep research, have designed a secondary battery and an electrical device.

### [Negative electrode plate]

The negative electrode plate includes a negative electrode current collector and a negative electrode film layer arranged on at least one surface of the negative electrode current collector, in which the negative electrode film layer includes, in the direction that the tab extends, a first region and a second region arranged to at least one side of the first region, in which the first region includes a first negative electrode active material and the second region includes a second negative electrode active material, in which the first negative electrode active material has a powder OI value denoted as OIₐ, and the second negative electrode active material has a powder OI value denoted as OI_{b}, wherein the negative electrode film layer satisfies OIₐ < OI_{b}.

By arranging the first region and the second region in the direction that the tab extends and by making the OI value of the active material of the second region be higher than the OI value of the active material of the first region, the bulk orientation degree of the active material particles at the upper edge of the negative electrode plate can be increased, which can facilitate the intercalation of active ions; the dendrites that result from the reduction and precipitation of the active ions on the negative electrode surface can be reduced; the precipitation at the place where the thickness changes on the negative electrode plate (such as the connection between the main body and the tab) can be improved; and the risk of short circuits in the battery caused by the piercing of the separator by the dendrites can be reduced. Accordingly, the safety performance and service life of the battery can be increased.

In some embodiments, the powder OI value of the first negative electrode active material is denoted as OIₐ, and the powder OI value of the second negative electrode active material is denoted as OI_{b}, wherein OIₐ and OI_{b} satisfy 0.6 ≤ OIₐ/OI_{b} < 1, and optionally 0.7 ≤ OIₐ/OI_{b} ≤ 0.9, 0.75 ≤ OIₐ/OI_{b} ≤ 0.85, 0.8 ≤ OIₐ/OI_{b} ≤ 0.84, 0.8 ≤ OIₐ/OI_{b} ≤ 0.9, o 0.8 ≤ OIₐ/OI_{b} ≤ 0.87. Under the condition that the powder OI value of the first negative electrode active material and that of the second negative electrode active material have a proper ratio, the active ion precipitation in the secondary battery can be further improved and the safety performance of the battery can be improved.

In some embodiments, the powder OI value of the first negative electrode active material is denoted as OIₐ and the powder OI value of the second negative electrode active material is denoted as OI_{b}, wherein OIₐ and OI_{b} satisfy 2.5 ≤ OIₐ ≤ 3.5, and optionally 2.5 ≤ OIₐ ≤ 3.0, 2.6 ≤ OIₐ ≤ 2.8, 2.7 ≤ OIₐ ≤ 2.9, and/or, 3.0 ≤ OI_{b} ≤ 4.5, and optionally 3.5 ≤ OI_{b} ≤ 4.0, 3.6 ≤ OI_{b} ≤ 3.8, and 3.7 ≤ OI_{b} ≤ 3.9. Under the condition that the powder OI value of the first negative electrode active material and that of the second negative electrode active material fall within proper value ranges, the active ion precipitation in the secondary battery can be further improved and the safety performance of the battery can be improved.

In some embodiments, the first region has a plate OI value denoted as OI₁ and the second region has a plate OI value denoted as OI₂, wherein OI₁ and OI₂ satisfy OI₁ < OI₂. By setting the plate OI value of the second region to be higher than the plate OI value of the first region, the bulk orientation degree of the active material particles at the upper edge of the negative electrode plate can be further increased, which can facilitate the intercalation of active ions; and thus the dendrites that result from the reduction and precipitation of the active ions on the negative electrode surface can be reduced. Accordingly, the safety performance and service life of the battery can be increased.

In some embodiments, the plate OI value of the first region is denoted as OI₁ and the plate OI value of the second region is denoted as OI₂, wherein OI₁ and OI₂ satisfy 0.7 ≤ OI₁/OI₂ <1. Preferably, 0.7 ≤OI₁/OI₂ <1, 0.8 ≤ OI₁/OI₂ ≤ 0.9, 0.75 ≤ OI₁/OI₂ ≤ 0.85, and 0.88 ≤ OI₁/OI₂ ≤ 0.95. By setting OI₁ and OI₂ to fall within a proper range, the negative electrode active material, during the lithium intercalation, may have less directional preference so that the expansion caused by lithium intercalation may disperse in various directions; accordingly, the volume expansion of the first region of the negative electrode plate can be further reduced, thereby improving the infiltrating performance of the electrolytic solution. In addition, the second region has proper active ion diffusion ability, thereby improving the active ion precipitation on the negative electrode, and thus the safety performance of the battery can be improved.

In some embodiments, the plate OI value of the first region denoted as OI₁ satisfies 7 ≤ OI₁ ≤ 8, and optionally 7.4 ≤ OI₁ ≤ 7.8, 7.2 ≤ OI₁ ≤ 7.6, 7.1 ≤ OI₁ ≤ 7.5, and 7.6 ≤ OI₁ ≤ 7.9, and/or, the plate OI value of the second region denoted as OI₂ satisfies 8 ≤ OI₂ ≤ 10, and optionally 8.5 ≤ OI₂ ≤ 9.5, 8.2 ≤ OI₂ ≤ 9, 8.8 ≤ OI₂ ≤ 9.2, and 9 ≤ OI₂ ≤ 9.8. Under the condition that the plate OI value of the first region and that of the second region fall within proper value ranges, the active ion precipitation in the secondary battery can be further improved and the safety performance of the battery can be improved.

In some embodiments, the first negative electrode active material has a volume average particle size Dv50 of from 8 µm to 15 µm, and optionally from 9 µm to 12 µm, from 11 µm to 14 µm, and from 10 µm to 13 µm; and/or, the second negative electrode active material has a volume average particle size Dv50 of from 4 µm to 8 µm, and optionally from 5 µm to 7 µm, from 6 µm to 8 µm, and from 4 µm to 6 µm. Under the condition that the Dv50 of the first negative electrode active material falls within a proper range, particles may have short ion transport path while a higher specific capacity may be obtained, and a clear pore structure among the particles is formed so as to favor the electrolytic solution to infiltrate and re-flow; as a result, the first region of the negative electrode plate may have a higher active ion migration performance, thereby improving the cycle life and fast charging performance of the battery. In addition, under the condition that the Dv50 of the second negative electrode active material is reduced properly, the gaps in the second region can be increased so as to facilitate the intercalation of active ions.

In some embodiments, the powder compaction density under a pressure of 3000N of the first negative electrode active material is higher than the powder compaction density under a pressure of 3000N of the second negative electrode active material. By making the powder compaction density of the first negative electrode active material be higher than that of the second negative electrode active material, the gaps in the second region can be increased, which can facilitate the intercalation of active ions, while a higher cycle life, fast charging performance, and energy density can be achieved.

In some embodiments, the powder compaction density under a pressure of 3000N of the first negative electrode active material is denoted as P₁, and the powder compaction density under a pressure of 3000N of the second negative electrode active material is denoted as P₂, wherein P₁ and P₂ satisfy 1 ≤ P₁/P₂ ≤ 1.2, and optionally 1.05 ≤ P₁/P₂ ≤ 1.15, 1.08 ≤ P₁/P₂ ≤ 1.12, 1.1 ≤ P₁/P₂ ≤ 1.18, and 1.02 ≤ P₁/P₂ ≤ 1.08. Under the condition that the powder compaction density of the first negative electrode active material and that of the second negative electrode active material have proper ratio, the gaps in the second region can be increased, which cab facilitate the intercalation of active ions, while a higher cycle life, fast charging performance, and energy density can be achieved.

In some embodiments, the powder compaction density under a pressure of 3000N of the first negative electrode active material is from 1.45 g/cm³ to 1.65g/cm³, and optionally from 1.5 g/cm³ to 1.6 g/cm³, 1.47 g/cm³ to 1.58 g/cm³, 1.53 g/cm³ to 1.61 g/cm³, and 1.55 g/cm³ to 1.63 g/cm³; and/or, the powder compaction density under a pressure of 3000N of the second negative electrode active material is from 1.35 g/cm³ to 1.45 g/cm³, and optionally from 1.4 g/cm³ to 1.45 g/cm³, and 1.38 g/cm³ to 1.42 g/cm³. Under the condition that the powder compaction density of the first negative electrode active material and that of the second negative electrode active material fall within proper ranges, higher cycle life, fast charging performance, the gaps in the second region can be increased, which can facilitate the intercalation of active ions, while a higher cycle life, fast charging performance, and energy density can be achieved.

In some embodiments, the first negative electrode active material has a tap density higher than the tap density of the second negative electrode active material. Under the condition that the tap density of the first negative electrode active material is increased within a proper range, the battery can be improved in terms of quick intercalation of lithium, and thus the cycling life of the battery is advantageously improved, and the energy density of the battery can also be increased.

In some embodiments, the second negative electrode active material is a secondary particle. By using such second negative electrode active material, the battery can have higher energy density, also can satisfy the requirements of reducing the precipitation of active ions; accordingly, the safety of the battery can be improved. Optionally, the first negative electrode active material includes at least one of the primary particle or the secondary particle.

Primary particles and secondary particles have meanings well-known in the art. Primary particles are non-agglomerated particles. Secondary particles are agglomerated particles formed by the aggregation of two or more than two primary particles. Primary particles and secondary particles can be easily distinguished by taking SEM images with Scanning Electron Microscope.

In some embodiments, the second region is arranged to the two sides of the first region; and optionally, two second regions arranged to the two sides of the first region have identical size in the direction that the tab extends. Under the condition that the second regions is arranged to the two sides of the first region, the active ion precipitation in the edge areas of the two sides of the plate can be improved simultaneously, and also the safety performance of the battery can be improved. Moreover, the electrolytic solution has good infiltrating consistency in different regions of the negative electrode film layer; accordingly, the active ion transport performance in different regions of the negative electrode film layer can be improved, thereby further improving the cycle life and fast charging performance of the battery.

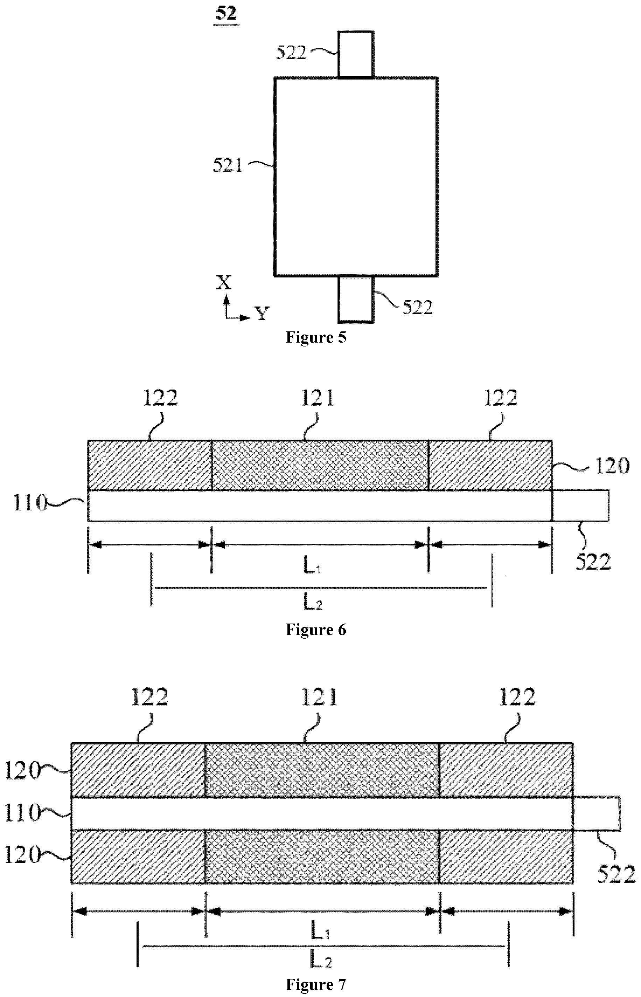

Figure 6 is a cross-sectional schematic diagram of a negative electrode plate of one embodiment of the present application. Figure 7 is a cross-sectional schematic diagram of a negative electrode plate of another embodiment of the present application. As shown in Figure 6 and Figure 7, in some embodiments, the first region 121 has a size in the direction that the tab 522 extends, denoted as L₁, and the second region 122 has a size in the direction that the tab 522 extends, denoted as L₂, wherein L₁ and L₂ satisfy L₁ ≥ L₂, optionally, 1 ≤ L₁/L₂ ≤ 50, 5 ≤ L₁/L₂ ≤ 45, 10 ≤ L₁/L₂ ≤ 40, 15 ≤ L₁/L₂ ≤ 35, 20 ≤ L₁/L₂ ≤ 30, and 23 ≤L₁/L₂ ≤ 27. Optionally, L₂ ≥ 15mm, L₂ ≥ 20mm, L₂ ≥ 25mm, and L₂ ≥ 30mm. Optionally, under the condition that the second regions 122 are arranged to two sides of the first region 121, the second regions 122 to the two sides have the extension length in the direction that tab 522 extends of greater than 15 mm. Optionally, the second region 122 may be a thinning region on the plate, in that region, the thickness of the second region 522 is smaller than that of the first region 121. Under the condition that, in the direction that the tab extends, the size of the first region 121 and that of the second region 522 have a proper ratio, the active ion migration performance of the negative electrode film layer can be improved, and the reversible capacity of the negative electrode film layer can also be improved; so that the battery may have a high cycle life, good fast charging performance, and high energy density simultaneously. Optionally, the second region 122 may be a thinning region arranged at the upper edge of the plate.

In some embodiments, the first active material includes an artificial graphite.

In some embodiments, the second active material includes at least one of an artificial graphite, a natural graphite, a hard carbon or a soft carbon.

In some embodiments, the first negative electrode active material may optionally include other active materials that can be used in negative electrodes of a secondary battery. Examples of other active materials may include natural graphite, silicon-based materials, tin-based materials, etc.

In some embodiments, the second negative electrode active material may optionally include other active materials that can be used in negative electrodes of a secondary battery. Examples of other active materials may include silicon-based materials, tin-based materials, etc.

In the negative electrode plate of the present application, typically, the first region and the second region of the negative electrode film layer may optionally include binders, conductive agents, and/or additives in addition to the negative electrode active materials. Examples of conductive agents may include one or more selected from the group consisting of the superconducting carbon, carbon black (such as acetylene black, Ketjen black), carbon dots, carbon nanotubes, Graphene, and carbon nanofibers. Examples of binders may include one or more selected from the group consisting of Styrene Butadiene Rubber (SBR), water-soluble unsaturated resin SR-1B, water-based acrylic resin, polyvinyl alcohol (PVA), sodium alginate (SA), and carboxymethyl chitosan (CMCS). Examples of additives may include thickening agents (such as carboxymethyl cellulose sodium CMC-Na) etc.

In the negative electrode plate of the present application, the negative electrode current collector may be a metal foil or a composite current collector (which may be formed by applying a metal material on a polymer substrate). As an example, the negative electrode current collector may be a copper foil. The negative electrode film layer may be arranged on one side of the negative electrode current collector or on both sides of the negative electrode current collector.

The second aspect of the embodiment of the present application provides an electrical device, including the secondary battery as mentioned above, for providing electrical energy.

Referring to Figure 6, the negative electrode plate includes the negative electrode current collector 110 and the negative electrode film layer 120 arranged on one surface of the negative electrode current collector 110. The tab 522 extends from one edge of the negative electrode current collector 110. The negative electrode film layer 120, in the direction that the tab 522 extends, is divided into a first region 121 and a second region 122 arranged to two sides of the first region 121.

Referring to Figure 7, the negative electrode plate includes the negative current collector 110 and the negative electrode film layer 120 arranged on both sides of the negative electrode current collector 110. The tab 522 extends from one edge of the negative electrode current collector 110. The negative electrode film layer 120, in the direction that the tab 522 extends, is divided into the first region 121 and the second region 122 arranged on both sides of the first region 121.

In the negative electrode plate, the tab may be connected to the negative current collector via welding; alternatively, the tab may be formed by leaving a blank area (i.e. the area that is not covered with the negative electrode film layer) on the negative current collector and cutting the blank area.

It should be noted that the various parameters as provided for a negative electrode film layer in the present application (such as the size and compaction density of different areas of the negative electrode film layer) refer to the parameter of a one-side film layer. When the negative electrode film layer is arranged on both sides of the negative electrode current collector, if a film layer on one side has a parameter satisfying the requirements of the present application, it should be considered as falling within the protection scope of the present application. Moreover, the parameters of different areas of the negative electrode film layer mentioned in the present application, such as the size, the compaction density, and the surface density, refer to those of the film layer that has already been subjected to cold compressing and used for assembling a battery.

In the secondary battery of the present application, the negative electrode plate may include additional functional layers other than the negative electrode film layer. For example, in some embodiments, the negative electrode plate as described in the present application may further include a conductive primer layer (which is composed of e.g. a conductive agent and a binder) arranged between the negative electrode current collector and the negative electrode film layer. In other embodiments, the negative electrode plate as described in the present application may further include a protective layer covering the surface of the negative electrode film layer.

In the present application, the charging and discharging rate of 1C refers to the rated capacity of a battery that is completely discharged in 1h. The exemplary calculating formula is as follows: charging and discharging rate C = charging and discharging current (in unit A) / rated capacity (in unit Ah). The upper limit voltage V0 is the upper limit value of the service voltage of a battery product. For example, generally, the upper limit voltage V0 of a lithium iron phosphate based battery product may be 3.65V, the upper limit voltage V0 of LiNi0.8Co0.1Mn0.1O2 (NCM811)-based battery product may be 4.2V; and the upper limit voltage V0 of LiNi0.5Co0.2Mn0.3O2 (NCM523)-based battery product may be 4.3V.

In the present application, the size of the first region of the negative electrode film layer in the direction that the tab extends and the size of the second region of the negative electrode film layer in the direction that the tab extends have a meaning as commonly understood in the art and can be measured using methods well-known in the art. An exemplary measurement method may be as follows: taking a part of the negative electrode plate which is complete in the direction that the tab extends; cutting a strip-like electrode plate having a width of 10 mm ± 2 mm with a ceramic scissors along the direction parallel to the direction that the tab extends (denoted as a Q-direction); cutting the electrode plate at an equal interval of 10 mm along the direction perpendicular to the Q-direction, marking as Sample 1, Sample 2 . . . in one direction; polishing the Q-direction sections of the samples with an ion beam polisher (such as IB-19500CP) and imaging the polished sections of the samples using analytical scanning electron microscopy (such as ZEISS Sigma 300); distinguishing the interface of the first region and the second region depending on the morphology and porosity differences of the negative electrode particles in the first region and the second region, thereby determining the size of the first region and that of the second region in the direction that the tab extends.

In the present application, the powder compaction density under a pressure of 3000N of the negative electrode active material has a meaning as commonly understood in the art and can be determined using methods well-known in the art. For example, it may be determined with an electronic pressure testing machine (such as UTM7305 model) referring to the standard GB/T24533-2009. An exemplary testing method may be as follows: weighing 1 g of negative electrode active material and adding it into a mold having a bottom area of 1.327 cm²; applying a pressure to 3000 N, after holding for 30s, releasing the pressure and holding for 10s; recording and calculating to give the powder compaction density under a pressure of 3000N of the negative electrode active material.

In the present application, the OI value of the negative electrode plate = C004/C110, in which C004 is the peak area of the 004 crystal plane diffraction peak of the graphite material in the negative electrode plate, and C110 is the peak area of the 110 crystal plane diffraction peak of the graphite material in the negative electrode plate. The peak area of the diffraction peak may be given via a X-ray diffraction pattern testing.

In the testing of the OI value of the negative electrode plate, the X-ray diffraction analysis may be conducted on an X-ray Diffractometer in accordance with the standard JISK 0131-1996. The exemplary testing method may be as follows: cutting the negative electrode plate corresponding to the first region of the negative electrode film layer and the second region of the negative electrode film layer respectively to give test samples; placing the test samples of the negative electrode plate into an X-ray Diffractometer (such as Bruker D8 Discover) to give the X-ray diffraction patterns; giving the OI value of the test samples of the negative electrode plate in accordance with C004/C110 obtained in the X-ray diffraction pattern. The X-ray diffraction analysis may be conducted under conditions of e.g. a copper target as an anode target and a CuK α Ray as the radiation source, a ray wavelength λ = 1.5418 Å, a scanning 2θ angle range of from 20° to 80°, and a scanning rate of 4 °/min.

In the present application, the volume average particle size Dv50 of the negative electrode active material has a meaning as commonly understood in the art and can be determined using methods well-known in the art. For example, it may be determined with a Laser Diffraction Methods for Particle Size Analysis. The Laser Diffraction Methods for Particle Size Analysis may be conducted on a laser particle size analyzer (such as Malvern Mastersize 3000) in accordance with the standard GB/T 19077-2016. Dv50 is the particle size when the cumulative volume distribution percentage of the negative electrode active material reaches 50%.

It should be noted that the parameters tests for the negative electrode active material as mentioned above may be conducted by taking test samples from a negative electrode active material or from a secondary battery. Under the condition that the test samples are taken from a secondary battery, for example, the test samples may be taken as follows:
(1) discharging the secondary battery (for safety, it is usually kept at a fully discharged state); disassembling the battery to take out the negative electrode plate, which is then soaked into dimethyl carbonate (DMC) for a certain time (for example, from 2 to 10 hours); then taking out the negative electrode plate and drying it at a certain temperature for certain time (such as at 60°C for 4h), and taking out the negative electrode plate after drying;
(2) baking the dried negative electrode plate obtained in step (1) at a certain temperature for a certain time (such as at 400°C for 2 hours), and taking samples of the negative active material at the parts corresponding to the first region and the second region of the baked negative electrode plate respectively (the samples may be taken via a blade scraping sampling); and
(3) sieving the negative electrode active material as collected in step (2) (such as passing through a sieve of 200 mesh) to give the samples of the negative electrode active material for testing the aforementioned material parameters of the present application.

In the present application, the compaction density of the negative electrode film layer may be measured using methods well-known in the art. For example, it may be measured as follows: taking the negative electrode plate that has a coating on one side and is cold-pressed (if the negative electrode plate has coatings on two sides, the coating on one side may be wiped off first in advance), then cutting it into a square sheet (excluding the tab) having an area of S₁ via punching in the direction parallel to the direction the tab extends, and then weighing and record the weight as M₁; and wiping off the negative electrode film layer of the weighed negative electrode plate, and then weighing the negative current collector, recorded as M₀. The areal density of the negative electrode film layer = (M1 - M₀)/S₁. The compaction density of the negative electrode film layer = the areal density of the negative electrode film layer/the thickness of the negative electrode film layer.

### [Positive electrode plate]

The secondary battery of the present application may use a positive electrode plate well-known in the art. In some embodiments, the positive electrode plate includes the positive electrode current collector and the positive electrode film layer which is arranged on at least one surface of the positive electrode current collector and includes the positive electrode active material.

In the present application, the positive electrode active material is not limited. In some embodiments, the positive active material includes one or more of lithium transition metal oxides (such as lithium nickel oxides, lithium cobalt oxides, lithium nickel cobalt manganese oxides, and lithium nickel cobalt aluminum oxides), lithium-containing phosphates having an olivine structure (such as lithium iron phosphate), and the modified compounds thereof.

Typically, the positive electrode film layer may include optional binders and/or conductive agents in addition to the positive electrode active material. Examples of the conductive agents may include one or more of superconducting carbon, carbon black (such as acetylene black, ketjen black), carbon dot, carbon nanotube, graphene, and carbon nanofiber. Examples of the binders may include one or more of polyvinylidene fluoride (PVDF), polytetrafluoroethylene (PTFE), polyacrylic acid (PAA), polyvinyl alcohol (PVA), sodium alginate (SA), polymethacrylic acid (PMAA), and carboxymethyl chitosan (CMCS).

The positive electrode current collector may be a metal foil or a composite current collector (which may be formed by applying a metal material on a polymer substrate). For example, the positive current collector may be an aluminum foil.

### [Electrode Assembly]

A positive electrode tab extends from one edge of the positive electrode plate. A negative tab extends from one edge of the negative electrode plate. The positive electrode tab may be connected to the positive current collector via welding; alternatively, the positive electrode tab may be formed by leaving a blank area (i.e. the area that is not covered with the positive electrode film layer) on the positive current collector and cutting the blank area. Likewise, the negative electrode tab may be connected to the negative electrode plate. The positive electrode plate, the negative electrode plate, and the separator are subjected to a stacking or winding process to form the main body, from which two tabs (i.e. the positive electrode tab and the negative electrode tab) are extended. In the electrode assembly, two tabs may extend from one side of the main body or from two opposite sides of the main body.

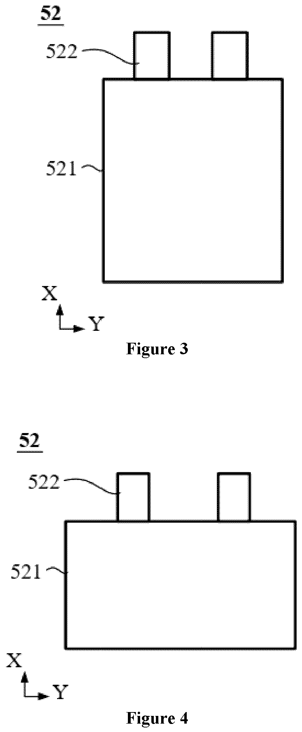

Figure 3 is a schematic diagram of an electrode assembly of one embodiment of the present application. Figure 4 is a schematic diagram of an electrode assembly of another embodiment of the present application. Figure 5 is a schematic diagram of an electrode assembly of yet another embodiment of the present application. As shown in Figure 3 and Figure 4, two different electrode assemblies are shown as examples, with two tabs 522 extending from one side of the main body 521. As shown in Figure 5, another electrode assembly is shown as an example, with two tabs 522 extending from two opposite sides of the main body 521.

In the present application, the separator is not particularly limited; it may be any material well-known in the art. In some embodiments, the separator may be selected from glass fibers, nonwoven fabrics, polyethylene films, polypropylene films, polyvinylidene fluoride films, and the multilayer composite films thereof.

### [Electrolytic solution]

In the present application, the electrolytic solution of the secondary battery are not particularly limited; and it may be selected as demand. The electrolytic solution typically includes a lithium salt as the electrolyte and a solvent.

In some embodiments, the lithium salt as the electrolyte may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoroacetate borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, the solvent may be one or more selected from ethylene carbonate (EC), propylene carbonate (PC), methyl ethyl carbonate (EMC), Diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propanoate (PP), methyl butyrate (MB), ethyl butyrate (EB), 1,4-butyrolactone (GBL), sulfolane (SF), dimethyl sulfone (MSM), methyl ethyl sulfone (EMS), and diethylsulfone (ESE).

In some embodiments, the electrolytic solution may further include optional additives. For example, the additives may include additives for forming the negative electrode film, additives for forming the positive electrode film, and additives that may improve certain performance of the battery, such as additives that can improve the overcharging performance, high-temperature performance, and low-temperature performance of the battery.

### Preparation Method

The present application also provides a method for preparing the secondary battery. The method includes the steps for preparing the negative electrode plate of the secondary battery as follows: providing a first negative electrode slurry containing the first negative electrode active material and a second negative electrode slurry containing the second negative electrode active material, wherein the first negative electrode active material includes artificial graphite and the second negative electrode active material includes graphite; providing a negative electrode current collector, which, in the direction that the tab extends, includes a first coating region and a second coating region located on two sides of the first coating region on at least one surface of the negative electrode current collector; applying the first negative electrode slurry to the first coating region of the negative electrode current collector and applying the second negative electrode slurry to the second coating region of the negative electrode current collector to form a negative electrode film layer, affording the negative electrode plate.

The negative electrode slurry is usually formed by dispersing a negative electrode active material and optional conductive agents and binders into a solvent and stirring evenly. The solvent may be N-methyl-2-pyrrolidone (NMP) or deionized water.

The first negative electrode slurry and the second negative electrode slurry may be applied in two steps or in one step. The coating layer, after being dried and cold pressed, forms the negative electrode film layer.

Other structures and preparation methods of the secondary battery of the present application are well-known. For example, the positive electrode plate of the present application may be prepared as follows: mixing a positive electrode active material, optional conductive agent, and a binder and then dispersing them into a solvent (such as NMP) under even stirring to form a slurry, and afterwards, applying the slurry on the positive electrode current collector; after drying and cold pressing, forming the positive electrode plate.

In some embodiments, the positive electrode plate, the separator, and the negative electrode plate are assembled into an electrode assembly, and then the electrode assembly is placed in an outer packaging, into which the electrolytic solution is injected; after vacuum encapsulation, standing, formation, shaping, and other processes, the secondary battery is obtained.

In the secondary battery of the present application, the outer packaging may be a hard shell, such as a hard plastic shell, an aluminum shell, and a steel shell. The outer packaging may also be a soft bag, such as a bag-type soft bag. The soft bag may have a material of plastics, such as one or more of polypropylene (PP), polybutylene terephthalate (PBT), and polybutylene succinate (PBS).

The optional technical features of the secondary battery in the present application may be also applicable in the preparation method of the present application.

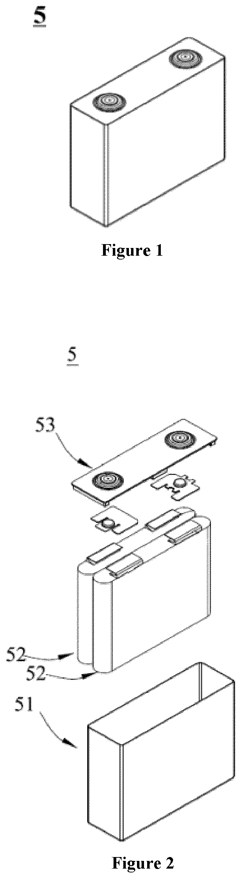

The shapes of the secondary battery of the present application are not particularly limited; and they may be cylindrical, square, or any other shape. Figure 1 shows an exemplary square secondary battery.

Figure 1 is a schematic diagram of a secondary battery of one embodiment of the present application. Figure 2 is an exploded view of Figure 1. As shown in Figure 1 and Figure 2, the secondary battery includes an outer packaging, electrode assembly 52, and electrolytic solution (not shown). The outer packaging may include a housing 51 and a top cover 53. The housing 51 has a receiving cavity and an opening communicated with the receiving cavity. The electrode assembly 52 is arranged in the receiving cavity. The number of the electrode assembly 52 is not limited and may be one or more than one. The electrode assembly is immersed in the electrolytic solution. The top cover 53 covers the opening in order to seal the receiving chamber.

Hereinbelow, the battery module of yet another aspect of the present application will be described. The battery module includes the secondary battery of the present application.

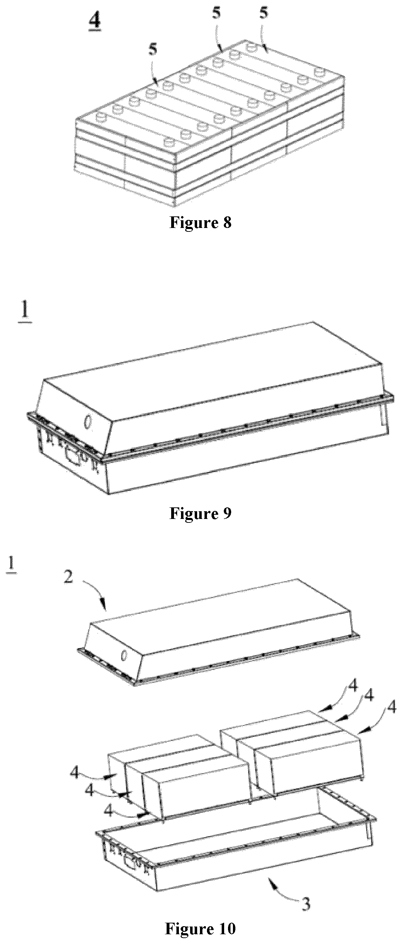

Figure 8 is a schematic diagram of a battery module of one embodiment of the present application. As shown in Figure 4 and Figure 8, the battery module 4 includes multiple secondary batteries 5. The Multiple secondary batteries 5 are arranged longitudinally. The battery module 4 may serve as a power supply device or an energy storage device. The number of the lithium-ion batteries 5 contained in the battery module 4 may be adjusted in accordance with the application and capacity of the battery module 4.

Hereinbelow, the battery pack of another aspect of the present application will be described. The battery pack includes the secondary battery and/or the battery module of the present application.

Figure 9 is a schematic diagram of a battery pack of one embodiment of the present application. Figure 10 is an exploded view of Figure 9. As shown in Figure 9 and Figure 10, the battery pack 1 includes a battery box and multiple battery modules 4 arranged in the battery box. The battery box includes an upper box 2 and a lower box 3. The upper box 2 and lower box 3 are assembled to form a space for accommodating the battery module 4. The number and the arrangement of the battery modules 4 used in battery pack 1 may be determined in accordance with actual needs.

Hereinbelow, the device of yet another aspect of the present application will be described. The device includes at least one of the secondary battery, the battery module, or the battery pack of the present application. The secondary battery, the battery module, or the battery pack may be used as a power source for a device or as an energy storage unit for a device. The device may be, but are not limited to, mobile device (such as a mobile phone and a laptop), an electric vehicle (such as an electric car, an electric bus, an electric tram, an electric bicycle, an electric motorcycle, an electric scooter, an electric golf cart, an electric truck), an electric train, a ship and a satellite, an energy storage system, etc. The secondary battery, battery module, or battery pack used in a device may be selected in accordance with the using needs of the device.

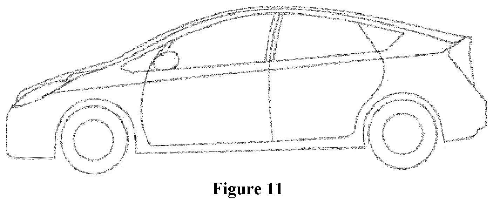

Figure 11 is a schematic diagram of a device in which the secondary battery is used as a power source. As shown in Figure 11, the electrical device may be an electric vehicle. The electric vehicle may be a battery electric vehicle, a hybrid electric vehicle or a plug-in hybrid electric vehicle. The electric vehicle may include the battery module 4 or the battery pack 1 as described in the present application in accordance with the actual use.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### 1. Negative active material

Artificial graphite A is available from negative electrode material suppliers. Artificial graphite A is a primary particle with a specific capacity of from 340 mAh/g to 353 mAh/g; while other physical parameters are listed in Table 1.

Artificial graphite B is available from negative electrode material suppliers. Artificial graphite B is a secondary particle with a specific gram capacity of from 353 mAh/g to 360 mAh/g; while other physical parameters are listed in Table 1.

Natural graphite is available from negative electrode material suppliers. The natural graphite has physical parameters as follows: a specific capacity of 365 mAh/g, Dv50 = 8 µm, and a powder compaction density under 3000N of 1.85g/cm³.

Hard carbon is available from negative electrode material suppliers. The hard carbon has physical parameters as follows: a specific capacity of 500 mAh/g, Dv50 = 5 µm, and a powder compaction density under 3000N of 1g/cm³.

Soft carbon is available from the supplier of negative electrode materials. The soft carbon has physical parameters as follows: a specific capacity of 345 mAh/g, Dv50 = 20 m, and a powder compaction density under 3000N of 0.6g/cm³.

### 2. Preparation of battery

### Example 1

### Preparation of negative electrode plate

Artificial graphite A as the first negative electrode active material, Super P as the conductive agent, SR-1B as the binder, and CMC-Na as the thickener were mixed in a mass ratio of 96:1.5:1.5:1 in a proper amount of deionized water to form a uniform first negative electrode slurry. The first negative electrode active material has a Dv50 of 6.2 µm.

Artificial graphite B as the second negative electrode active material, Super P as the conductive agent, SBR as the binder, and CMC-Na as the thickener were mixed in a mass ratio of 96:1.5:1.5:1 in a proper amount of deionized water to form a uniform second negative electrode slurry. The second negative electrode active material has a Dv50 of 16.3 µm.

Copper foil was used as the negative electrode current collector. The surface of the copper foil was divided into a coating region and a blank region adjacent to the coating region in the direction that the tab extends. The coating region was divided into a first coating region and a second coating region that was arranged on the two sides of the first coating region in the direction that the tab extended. The first negative electrode slurry was applied to the first coating region of the negative electrode current collector, and the second negative electrode slurry was applied to the second coating region of the negative electrode current collector to form a negative electrode coating. The negative electrode coating was dried and cold pressed to form a negative electrode film layer. The blank region of the negative electrode current collector was cut to form a negative electrode tab, giving the negative electrode plate.

In the negative electrode plate, the negative electrode film layer included a first region and a second region arranged on the two sides of the first region in the direction that the tab extended, and the two second regions arranged on the two sides of the first region had identical size in the direction that the tab extended. The size of the first region in the direction that the tab extended was denoted as L₁, and the sum of the dimensions of the two second regions on the two sides of the first region in the direction that the tab extended was denoted as L₂, satisfying L₁/L₂ = 25.

### Separator

### Polyethylene (PE) film was selected as the separator.

### Preparation of electrolytic solution

Ethylene carbonate (EC), methyl ethyl carbonate (EMC) and Diethyl carbonate (DEC) were mixed in a volume ratio of 4:3:3, and then a fully dried lithium salt LiPF6 was uniformly dissolved in the above solution to obtain an electrolytic solution, with the concentration of LiPF6 being 1 mol/L.

### Preparation of secondary battery

The positive electrode plate, the separator and the negative electrode plate were stacked and coiled in sequence to obtain the electrode assembly; the electrode assembly was installed into the outer packaging and the above electrolytic solution was added into the outer packaging. After processes of packaging, standing, formation, aging, etc., the secondary battery was obtained. The tab extended from the height direction of the main body.

The preparations in Examples 2-27 and Comparative Examples 1-2 were similar to those of Example 1, except that the preparation parameters of the negative electrode were adjusted. The different preparation parameters and product parameters are listed in Tables 1 and 2.

### 3. Battery performance tests

### (1) Fast charging test

At 25 °C, the battery of each Example and each Comparative Example was charged and discharged for the first time with a current of 1C (that is, the current of rated capacity was fully discharged within 1h). In particular, the battery was charged at a constant current rate of 1C to a voltage of 4.3V, then was charged at the constant voltage to a current of ≤ 0.05C, after standing for 5min, and then it was discharged at a constant current rate of 0.33C to a voltage of 2.8V. The actual capacity was recorded as C₀.

The battery was then charged at a constant current of 2.0C₀, 2.5C₀, 3.0C₀, 3.5C₀, 4.0C₀, 4.5C₀, 5.0C₀, and 5.5C₀ sequentially to the full battery charging cut-off voltage of 4.3V or negative electrode cut-off potential of 0V (whichever reached first), and after each charging, the battery was discharged at 1C₀ to the full battery discharging cut-off voltage of 2.8V; the corresponding negative electrode potentials, when charging to 10%, 20%, 30% . . . 80% SOC (State of Charge) at different charging rates, were recorded. The charging rate versus negative electrode potential curves were plotted for different SOC states, and through a linear fitting, the charging rates correspond to 0V of the negative electrode potential at different SOC states were obtained. The charging rates are the charging windows for those SOC states, denoted as C20%SOC, C30%SOC, C40%SOC, C50%SOC, C60%SOC, C70%SOC, and C80%SOC. According to the formula (60/C20%SOC + 60/C30%SOC + 60/C40%SOC + 60/C50%SOC + 60/C60%SOC + 60/C70%SOC + 60/C80%SOC) × 10%, the charging time T of the secondary battery from 10% SOC to 80% SOC can be calculated. The shorter the charging time T, the better the fast-charging performance of the secondary battery.

### (2) Cyclic performance testing

At 25 °C, the secondary battery as prepared in each Examples and Comparative Examples was charged at a constant current rate of 1C to 4.3V and then was charge at the constant voltage to a current of ≤ 0.05C; after standing for 5 minutes, it was discharged at a constant current rate of 1C to 2.8V and then was allowed to stand for 5 minutes. That is one charging and discharging cycle. The initial discharging capacity was recorded. Following that method, the battery was charged and discharged in cycling until its capacity decayed to 80% of the initial discharging capacity. The number of cycles then was recorded as the cycle life of the battery at 25 °C. The more the number of cycles, the longer the cycle life of the battery.

### The battery performance testing results are shown in Table 3.

**Table 1: Preparation parameters of the negative electrode plates.**

| Nos. | First region | | | | | Second region | | | | |
|---|---|---|---|---|---|---|---|---|---|---|
| | Type of the first negative electrode active material | OI value of the first negative electrode active material | OI value of the plate | Dᵥ50 of the first negative electrode active material (µm) | Powder compaction density under 3000N, D₁ (g/cm³) | Type of the second negative electrode active material | OI value of the second negative electrode active material | OI value of the plate | Dᵥ50 of the second negative electrode active material (µm) | Powder compaction density under 3000N, D₂ (g/cm³) |
| Example 1 | Artificial graphite A | 2.7 | 7.1 | 8.2 | 1.47 | Artificial graphite B | 4.3 | 9.2 | 4.3 | 1.35 |
| Example 2 | Artificial graphite A | 3.2 | 7.4 | 8.9 | 1.53 | Artificial graphite B | 4.2 | 8.8 | 5.1 | 1.39 |
| Example 3 | Artificial graphite A | 3.4 | 7.5 | 9.4 | 1.56 | Artificial graphite B | 3.8 | 8.4 | 5.7 | 1.41 |
| Example 4 | Artificial graphite A | 3.2 | 7.7 | 10.5 | 1.59 | Artificial graphite B | 4.2 | 8.2 | 6.4 | 1.43 |
| Example 5 | Artificial graphite A | 3.2 | 7.4 | 11.3 | 1.62 | Artificial graphite B | 4.2 | 9.7 | 7.2 | 1.47 |
| Example 6 | Artificial graphite A | 3.2 | 7.4 | 11.7 | 1.56 | Artificial graphite B | 4.2 | 9.2 | 7.7 | 1.43 |
| Example 7 | Artificial graphite A | 3.2 | 7.4 | 12.4 | 1.56 | Artificial graphite B | 4.2 | 9.2 | 6.4 | 1.43 |
| Example 8 | Artificial graphite A | 3.2 | 7.4 | 13.8 | 1.56 | Artificial graphite B | 4.2 | 9.2 | 6.4 | 1.43 |
| Example 9 | Artificial graphite A | 3.2 | 7.4 | 14.6 | 1.56 | Artificial graphite B | 4.2 | 9.2 | 6.4 | 1.43 |
| Example 10 | Artificial graphite A | 3.2 | 7.4 | 10.5 | 1.56 | Natural graphite | 4.2 | 9.2 | 6.4 | 1.43 |
| Example 11 | Artificial graphite A | 3.2 | 7.4 | 10.5 | 1.56 | Artificial graphite B+Natural graphite | 4.2 | 9.2 | 6.4 | 1.43 |
| Example 12 | Artificial graphite A | 3.2 | 7.4 | 10.5 | 1.56 | Hard carbon | 4.2 | 9.2 | 6.4 | 1.43 |
| Example 13 | Artificial graphite A | 3.2 | 7.4 | 10.5 | 1.56 | Artificial graphite B+Hard carbon | 4.2 | 9.2 | 6.4 | 1.43 |
| Example 14 | Artificial graphite A | 3.2 | 7.4 | 10.5 | 1.56 | Soft carbon | 4.2 | 9.2 | 6.4 | 1.43 |
| Example 15 | Artificial graphite A | 3.2 | 7.4 | 10.5 | 1.56 | Artificial graphite B+Soft carbon | 4.2 | 9.2 | 6.4 | 1.43 |
| Example 16 | Artificial graphite A | 3.2 | 7.4 | 10.5 | 1.56 | Artificial graphite B | 4.2 | 9.2 | 6.4 | 1.43 |
| Comparative Example 1 | Artificial graphite A | 4.5 | 8.2 | 8.4 | 1.89 | Artificial graphite A | 3.1 | 7.5 | 8.2 | 1.95 |
| Comparative Example 2 | Artificial graphite B | 4.5 | 8.2 | 8.6 | 1.91 | Artificial graphite A | 3.2 | 7.7 | 8.2 | 1.93 |

As shown in Table 1, when artificial graphite B was used in mixture with other materials, the mass ratio of artificial graphite B to other materials was 8:2.

**Table 2: Characteristic parameters of negative electrode plates and performance test results of secondary battery**

| Nos. | OIₐ/OI_{b} | OI₁/OI₂ | P₁/P₂ | Initial cycle discharging capacity, mAh/g | Fast charging time, in minutes (min) | Cycle performance (cycles) |
|---|---|---|---|---|---|---|
| Example 1 | 0.62 | 0.77 | 1.09 | 353 | 12 | 3000 |
| Example 2 | 0.76 | 0.84 | 1.10 | 353 | 15 | 2750 |
| Example 3 | 0.89 | 0.89 | 1.11 | 353 | 20 | 2500 |
| Example 4 | 0.76 | 0.94 | 1.11 | 353 | 17 | 2600 |
| Example 5 | 0.76 | 0.76 | 1.10 | 353 | 14 | 2900 |
| Example 6 | 0.76 | 0.80 | 1.09 | 353 | 13 | 3050 |
| Example 7 | 0.76 | 0.80 | 1.09 | 353 | 14 | 2900 |
| Example 8 | 0.76 | 0.80 | 1.09 | 353 | 15 | 2850 |
| Example 9 | 0.76 | 0.80 | 1.09 | 353 | 20 | 2600 |
| Example 10 | 0.76 | 0.80 | 1.09 | 366 | 10 | 3100 |
| Example 11 | 0.76 | 0.80 | 1.09 | 360 | 11 | 2800 |
| Example 12 | 0.76 | 0.80 | 1.09 | 423 | 8 | 3050 |
| Example 13 | 0.76 | 0.80 | 1.09 | 400 | 10 | 3000 |
| Example 14 | 0.76 | 0.80 | 1.09 | 345 | 8 | 3050 |
| Example 15 | 0.76 | 0.80 | 1.09 | 345 | 8 | 3050 |
| Example 16 | 0.76 | 0.80 | 1.09 | 353 | 13 | 3050 |
| Comparative Example 1 | 1.45 | 1.10 | 0.97 | 340 | 40 | 2000 |
| Comparative Example 2 | 1.40 | 1.06 | 0.99 | 353 | 30 | 2600 |

As can be seen from the data in the above tables, in the secondary battery of the Examples of the present application, the OI value of the active material and the OI value of the plate of the regions on the two sides of the negative electrode film layer in the direction that the tab extends were set to be higher than the OI value of the active material and the OI value of the plate in the middle area, so the battery had a higher energy density and also had higher cycle life and fast charging performance.

The battery of the Comparative Examples, due to failing to satisfy the above conditions, could not have high energy density and long cycle life simultaneously.

In addition, the inventors have found that when artificial graphite B is a secondary particle, the secondary battery could have further improved energy density in addition to longer cycle life and fast charging performance. The testing results are similar to those obtained in Examples 1-16 in Table 2, and thus are not repeated here.

Although the present application has been described with reference to preferred embodiments, various improvements can be made and components can be replaced with equivalents without departing from the scope of the present application. Especially, as long as there is no structural conflict, the various technical features mentioned in each embodiment can be combined in any way. The present application is not limited to the specific embodiments disclosed in the text, but includes all technical solutions falling within the scope of the claims.

## Claims

1. A secondary battery comprising
an electrode assembly comprising a main body and
a tab extending from the main body, wherein the main body comprises a negative electrode plate comprising
a negative current collector, and
a negative electrode film layer arranged on at least one surface of the negative current collector, wherein the negative electrode film layer comprises
a first region and a second region arranged to at least one side of the first region, in the direction that the tab extends,
wherein the first region comprises a first negative electrode active material and the second region comprises a second negative electrode active material, and wherein the first negative electrode active material has a powder OI value denoted as OIₐ, and the second negative electrode active material has a powder OI value denoted as OI_{b}, wherein the negative electrode film layer satisfies OIₐ < OI_{b}.

2. The secondary battery according to claim 1, wherein the powder OI value of the first negative electrode active material is denoted as OIₐ, and the powder OI value of the second negative electrode active material is denoted as OI_{b}, wherein OIₐ and OI_{b} satisfy 0.6 ≤ OIₐ/OI_{b}<1, and optionally 0.7 ≤ OIₐ/OI_{b} ≤ 0.9.

3. The secondary battery according to claim 1 or 2, wherein the first negative electrode active material has a powder OI value denoted as OIₐ, and the second negative electrode active material has a powder OI value denoted as OI_{b}, wherein OIₐ and OI_{b} satisfy
2.5 ≤ OIₐ ≤ 3.5, and optionally 2.5 ≤ OIₐ ≤ 3.0; and/or
3.0 ≤ OI_{b} ≤ 4.5, and optionally 3.5 ≤ OI_{b} ≤ 4.0.

4. The secondary battery according to any one of claims 1-3, wherein the first region has a plate OI value denoted as OI₁, and the second region has a plate OI value denoted as OI₂, wherein OI₁ and OI₂ satisfy OI₁ < OI₂.

5. The secondary battery according to any one of claims 1-4, wherein the plate OI value of the first region is denoted as OI₁, and the plate OI value of the second region is denoted as OI₂, wherein OI₁ and OI₂ satisfy 0.7 ≤ OI₁/OI₂ < 1.

6. The secondary battery according to any one of claims 1-5, wherein
the plate OI value of the first region denoted as OI₁ satisfies 7 ≤ OI₁ ≤ 8, and optionally 7.4 ≤ OI₁ ≤ 7.8; and/or
the plate OI value of the second region denoted as OI₂ satisfies 8 ≤ OI₂ ≤ 10, and optionally 8.5 ≤ OI₂ ≤ 9.5.

7. The secondary battery according to any one of claims 1-6, wherein
the first negative electrode active material has a volume average particle size Dv50 of from 8 µm to 15 µm, and optionally from 9 µm to 12 µm; and/or,
the second negative electrode active material has a volume average particle size Dv50 of from 4 µm to 8 µm, and optionally from 5 µm to 7 µm.

8. The secondary battery according to any one of claims 1-7, wherein the first negative electrode active material has a powder compaction density under a pressure of 3000N of higher than the powder compaction density under a pressure of 3000N of the second negative electrode active material.

9. The secondary battery according to any one of claims 1-8, wherein the powder compaction density under a pressure of 3000N of the first negative electrode active material is denoted as P₁, and the powder compaction density under a pressure of 3000N of the second negative electrode active material is denoted as P₂, wherein P₁ and P₂ satisfy 1 ≤ P₁/P₂ ≤ 1.2, and optionally 1.05 ≤ P₁/P₂ ≤ 1.15.

10. The secondary battery according to any one of claims 1-9, wherein
the powder compaction density under a pressure of 3000N of the first negative electrode active material is from 1.45g/cm³ to 1.65g/cm³, and optionally from 1.5 g/cm³ to 1.6 g/cm³; and/or,
the powder compaction density under a pressure of 3000N of the second negative electrode active material is from 1.35g/cm³ to 1.45g/cm³, optionally ranging from 1.4 g/cm³ to 1.45 g/cm³.

11. The secondary battery according to any one of claims 1-10, wherein the first negative electrode active material has a tap density of higher than the tap density of the second negative electrode active material.

12. The secondary battery according to any one of claims 1-11, wherein the second negative electrode active material is a secondary particle.

13. The secondary battery according to any one of claims 1-12, wherein
the second region is arranged to the two sides of the first region; and
optionally, two second regions arranged to the two sides of the first region have identical size in the direction that the tab extends.

14. The secondary battery according to any one of claims 1-13, wherein the first region has a size in the direction that the tab extends denoted as L₁, and the second region has a size in the direction that the tab extends denoted as L₂, wherein L₁ and L₂ satisfy L₁ ≥ L₂;
optionally, 1 ≤ L₁/L₂ ≤ 50; and
optionally, L₂ ≥ 15mm.

15. The secondary battery according to any one of claims 1-14, wherein the first active material comprises a artificial graphite; and/or,
the second active material comprises at least one of artificial graphite, natural graphite, hard carbon or soft carbon.

16. An electrical device comprising the secondary battery according to any one of claims 1-15 for providing electrical energy.
